# EUROPEAN PATENT SPECIFICATION

(11) **EP 2 902 085 B1**
(45) Date of publication and mention of the grant of the patent: **14.10.2020**
(21) Application number: 14193928.0
(22) Date of filing: 19.11.2014
(51) Int. Cl.: B01D 35/30, B01D 29/15, B01D 35/00

(54) **AXIALLY COMPACT FUEL FILTER**
AXIAL KOMPAKTER KRAFTSTOFFFILTER
FILTRE DE CARBURANT AXIALEMENT COMPACT

(30) Priority: 19.11.2013 US 201314083638
(43) Date of publication of application: 05.08.2015
(73) Proprietor: Motor Components LLC, Elmira Heights, NY 14903 (US)
(72) Inventor: Moreira-Espinoza, Edison, Horseheads, NY 14845 (US); Seager, Kenneth F., Big Flats, NY 14814 (US)
(74) Representative: Reichert & Lindner Partnerschaft Patentanwälte

(56) References cited:
- EP-A1- 1 070 529
- DE-A1- 1 930 082
- DE-A1- 3 534 240
- DE-A1-102009 046 094
- US-B1- 6 595 371

## Description

The present disclosure relates to an axially compact fuel filter, in particular a fuel filter with a recess outlet port.

US Patent US 6,595,371 B1 discloses a fluid filter assembly, which includes a filter housing, a filter element, and an outlet conduit coupled to the filter housing to discharge liquid fluid from a filtered-fluid region in the filter element. An elongated grommet is mounted on the outlet conduit and positioned in the filter housing to seal against an outer surface of the filter element and an inner surface of the filter housing.

German Patent Application DE 35 342 40 A1 discloses an alternating current filter for the flow of brake fluid. The housing of the alternating current filter of is formed by a surrounding, axially extending wall and two covers. Each cover shows a port. Inside the housing an axially movable piston is provided.

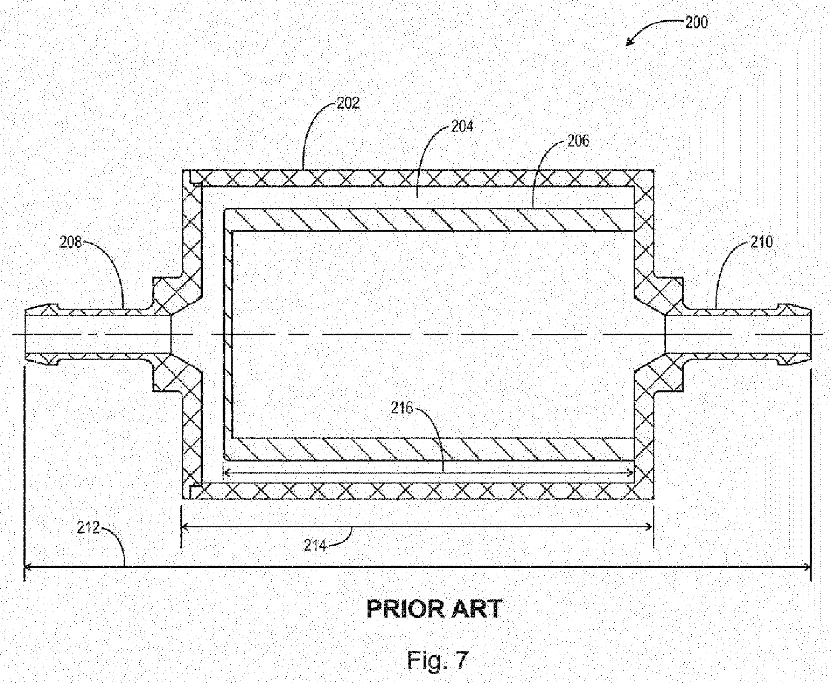

Figure 7 is a schematic cross-sectional view of typical prior art fuel filter **200.** Filter **200** includes housing **202,** cavity **204** formed by the housing, filter element **206** located in the cavity, inlet port **208,** and outlet port **210,** for example as described in US 6,595,371 B1. Fuel filters are used in a wide variety of combustion engine applications. In general, it is desirable to minimize axial length **212** of filter **200** while attaining a desired filtering capacity or function. The filtering capacity or function is dependent upon length **216** of element **206,** which in turn is dependent upon axial length **214,** which along with the respective positions of the input and output ports determines overall axial length **212.**

According to aspects illustrated herein, there is provided a fuel filter, including: a housing, an inlet port, and an outlet port. The housing includes: a first axially disposed side wall forming a radially outermost portion of a circumference for the housing; a second axially disposed side wall located radially inward of the first axially disposed wall; a first radially disposed end wall connected to a first axial end of the first axially disposed wall; and a second radially disposed end wall connected to a first axial end of the second axially disposed side wall. The outlet port extends from the second radially disposed end wall and is radially aligned with the second axially disposed side wall. The inlet port extends from the first radially disposed end wall.

According to aspects illustrated herein, there is provided a fuel filter, including: a housing including a first axially disposed side wall forming a radially outermost portion of a circumference for the housing and a second axially disposed side wall located radially inward of the first axially disposed wall; a cavity enclosed by the housing and including a first portion enclosed, in a radial direction, by only the first axially disposed side wall and a second portion radially disposed between the first and second axially disposed side walls; an inlet port open to the cavity; and an outlet port open to the first portion of the cavity and including a distal end radially aligned with the second portion of the cavity.

According to aspects illustrated herein, there is provided a fuel filter, including: a housing including a first and second axially disposed side walls, a first radially disposed end wall directly connected to a first axial end of the first axially disposed side wall, a second radially disposed end wall directly connected to a first axial end of the second axially disposed side wall, and a third radially disposed end wall directly connected to respective second axial ends of the first and second axially disposed side walls; a cavity including a first portion at least partially bounded by the first and third radially disposed end walls and the first axially disposed side wall and a second portion open to the first portion and at least partially bounded by the first and second axially disposed side walls and the third radially disposed end wall; an outlet port open to the first portion of the cavity, and including a first end direction connected to the third radially disposed wall and a distal end radially aligned with the second portion of the cavity and with the first and second axially disposed side walls and separated from the second axially disposed wall, in a radial direction, by a space; an inlet port open to the first portion of the cavity and directly connected to the first radially disposed end wall; and a filter element including an axially extending portion including a first axial end sealed against the second axially disposed wall or the third radially disposed end wall and a radially extending portion directly connected to a second axial end of the axially extending portion and wholly disposed in the first portion of the cavity.

Various embodiments are disclosed, by way of example only, with reference to the accompanying schematic drawings in which corresponding reference symbols indicate corresponding parts, in which:
Figure 1A is a perspective view of a cylindrical coordinate system demonstrating spatial terminology used in the present application;
Figure 1B is a perspective view of an object in the cylindrical coordinate system of Figure 1A demonstrating spatial terminology used in the present application; and,
Figure 2 is a side view of a fuel filter;
Figure 3 is an inlet end view of the fuel filter of Figure 2;
Figure 4 is an outlet end view of the fuel filter of Figure 2;
Figure 5 is a cross-sectional view generally along line 5,6-5,6 in Figure 4;
Figure 6 is a cross-sectional view generally along line 5,6-5,6 in Figure 4; and,
Figure 7 is a schematic representation of a typical prior art fuel filter.

At the outset, it should be appreciated that like drawing numbers on different drawing views identify identical, or functionally similar, structural elements of the disclosure. It is to be understood that the disclosure as claimed is not limited to the disclosed aspects.

Furthermore, it is understood that this disclosure is not limited to the particular methodology, materials and modifications described and as such may, of course, vary. It is also understood that the terminology used herein is for the purpose of describing particular aspects only, and is not intended to limit the scope of the present disclosure.

Unless defined otherwise, all technical and scientific terms used herein have the same meaning as commonly understood to one of ordinary skill in the art to which this disclosure belongs. It should be understood that any methods, devices or materials similar or equivalent to those described herein can be used in the practice or testing of the disclosure.

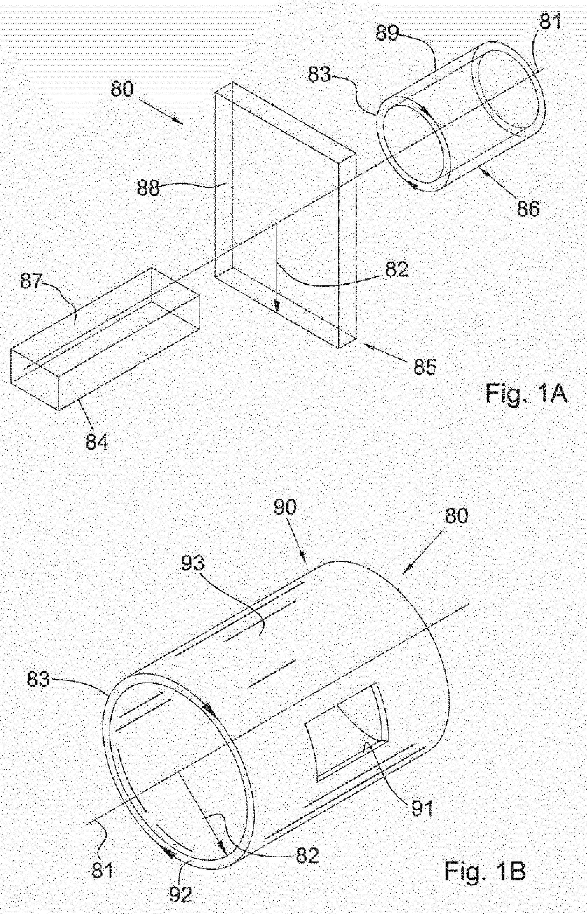

Figure **1A** is a perspective view of cylindrical coordinate system **80** demonstrating spatial terminology used in the present application. The present invention is at least partially described within the context of a cylindrical coordinate system. System **80** has a longitudinal axis **81,** used as the reference for the directional and spatial terms that follow. The adjectives "axial," "radial," and "circumferential" are with respect to an orientation parallel to axis **81,** radius **82** (which is orthogonal to axis **81**), and circumference **83,** respectively. The adjectives "axial," "radial" and "circumferential" also are regarding orientation parallel to respective planes. To clarify the disposition of the various planes, objects **84, 85,** and **86** are used. Surface **87** of object **84** forms an axial plane. That is, axis **81** forms a line along the surface. Surface **88** of object **85** forms a radial plane. That is, radius **82** forms a line along the surface. Surface **89** of object **86** forms a circumferential plane. That is, circumference **83** forms a line along the surface. As a further example, axial movement or disposition is parallel to axis **81,** radial movement or disposition is parallel to radius **82,** and circumferential movement or disposition is parallel to circumference **83.** Rotation is with respect to axis **81.**

The adverbs "axially," "radially," and "circumferentially" are with respect to an orientation parallel to axis **81,** radius **82,** or circumference **83,** respectively. The adverbs "axially," "radially," and "circumferentially" also are regarding orientation parallel to respective planes.

Figure **1B** is a perspective view of object **90** in cylindrical coordinate system **80** of Figure **1A** demonstrating spatial terminology used in the present application. Cylindrical object **90** is representative of a cylindrical object in a cylindrical coordinate system and is not intended to limit the present invention in any manner. Object **90** includes axial surface **91,** radial surface **92,** and circumferential surface **93.** Surface **91** is part of an axial plane, surface **92** is part of a radial plane, and surface **93** is a circumferential surface.

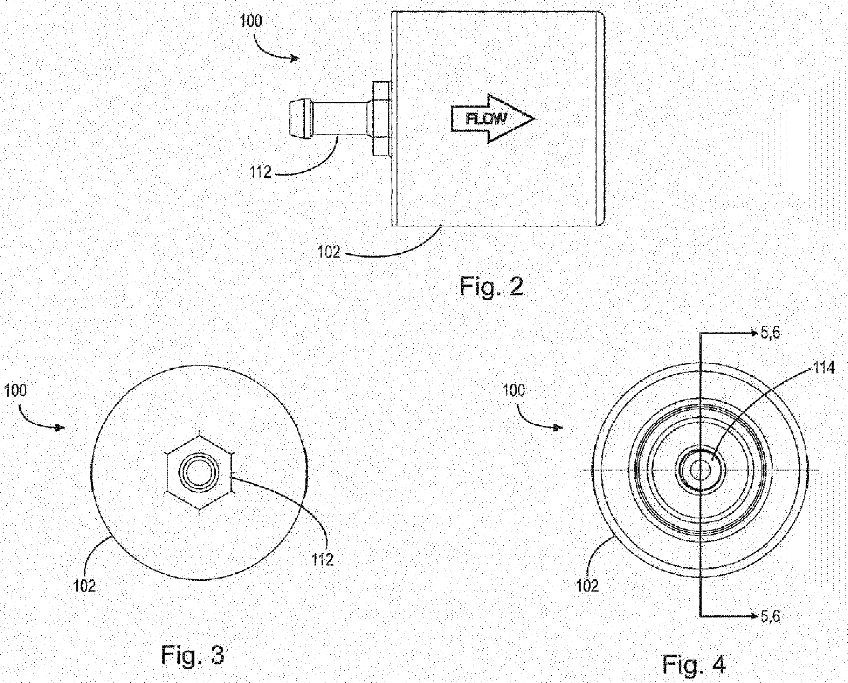

Figure 2 is a side view of fuel filter **100.**

Figure 3 is an inlet end view of fuel filter **100** of Figure 2.

Figure 4 is an outlet end view of fuel filter **100** of Figure 2.

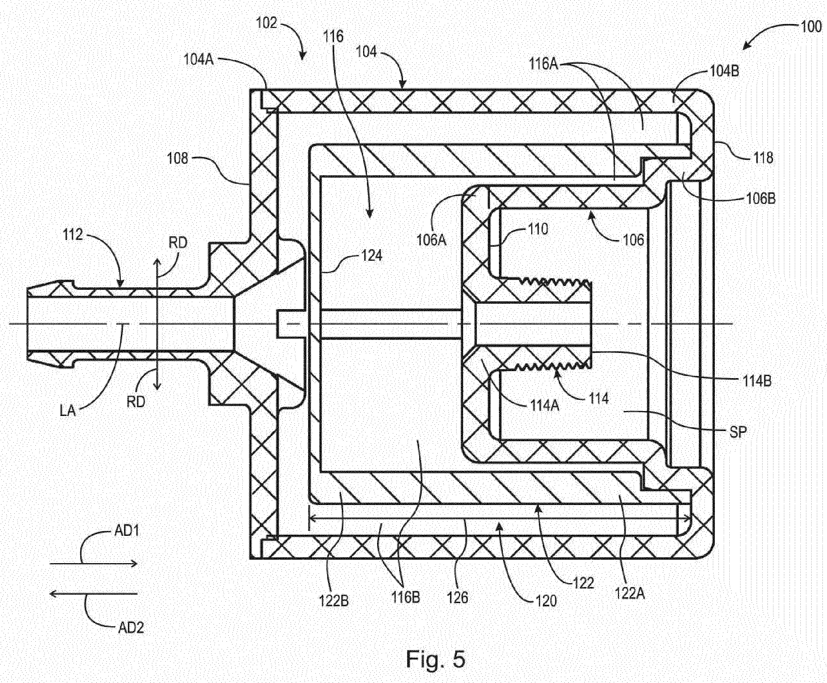

Figure 5 is a cross-sectional view generally along line 5,6-5,6 in Figure 4. The following should be viewed in light of Figures 2 through 5. Fuel filter **100** includes longitudinal axis **LA** and housing **102** including a first axially disposed side wall **104,** a second axially disposed side wall **106** and radially disposed end walls **108** and **110.** The first axially disposed side wall **104** forms a radially outermost portion of a circumference for the housing. The second axially disposed side wall **106** is located radially inward of the first axially disposed side wall **104.** End wall **108** is connected to axial end **104A** of the first axially disposed side wall **104.** End wall **110** is connected to axial end **106A** of the second axially disposed side wall **106.** Filter **100** includes an inlet port **112** and an outlet port **114.** Inlet port **112** extends from end wall **108.** Outlet port **114** extends from end wall **110** and is radially aligned with the second axially disposed side wall **106.** Note that radial and axial references are with respect to axis **LA.** As shown in Figure 5, inlet port **112** and outlet port **114** overlap in axial directions **AD1** and **AD2,** for example, axis **LA** passes through inlet port **112** and outlet port **114.**

In an example embodiment, the outlet port **114** includes axial end **114A** directly connected the end wall **110** and distal end **114B** radially aligned with the first axially disposed side wall **104** and the second axially disposed side wall **106.** In an example embodiment, an entirety of the outlet port **106** is radially aligned with the first axially disposed side wall **104** and the second axially disposed side wall **106** and is separated, in radial direction **RD,** from the second axially disposed side wall **106** by space **SP** external to housing **102.**

In an example embodiment, axial direction **AD1** is from the inlet port **112** toward the outlet port **114** and the outlet port **114** includes axial end **114A** directly connected to end wall **110,** and distal end **114B.** Each of the first axially disposed side wall **104** and the second axially disposed side wall **106** extends past distal end **114B** in axial direction **AD1.**

Fuel filter **100** includes cavity **116** enclosed by the housing **102.** In an example embodiment, axial direction **AD1** is from the inlet port **112** toward the outlet port **114** and the outlet port **114** includes axial end **114A** directly connected end wall **110,** and distal end **114B.** Portion **116A** of the cavity **116** extends past distal end **114B** in axial direction **AD1.**

In an example embodiment, the housing **102** includes radially disposed end wall **118** connecting axial end **104B,** opposite axial end **104A,** of the first axially disposed side wall **104** to axial end **106B,** opposite the axial end **106A,** of the second axially disposed side wall **106.** For axial direction **AD1** from the inlet port 112 toward the outlet port 114, end wall **118** is located past distal end **114B** in axial direction **AD1.**

In an example embodiment, portion **116A** of the cavity is radially disposed between the first axially disposed side wall **104** and the second axially disposed side wall **106.** Portion **116B** of the cavity **116** is radially disposed between side wall **104** and is free of alignment, in radial direction **RD,** with the second axially disposed side wall **106.**

In an example embodiment, fuel filter **100** includes filter element **120,** located within cavity **116,** and including axially disposed wall **122** and radially disposed wall **124** connected to axially disposed wall **122.** Wall **124** is located only in portion **116B.** At least a portion of axially disposed wall **122** is radially aligned with the outlet port **114.** In an example embodiment, portion **122A** of wall **122** is radially disposed between the first axially disposed side wals **104** and the second axially disposed side wall **106** and portion **122B** of axially disposed wall **122** is radially aligned with the first axially disposed side wall **104** and free of alignment, in radial direction **RD,** with the second axially disposed side wall **106.**

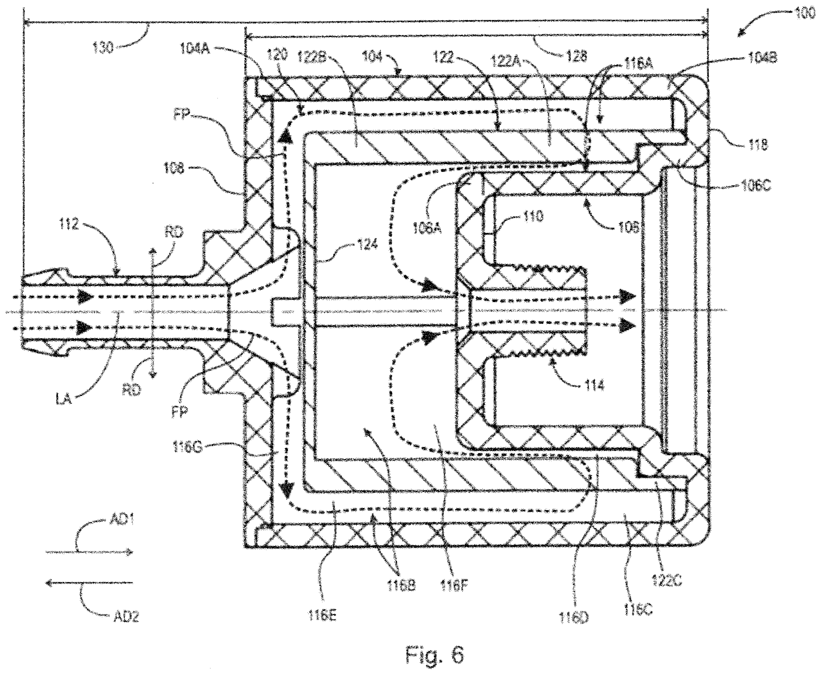

Figure 6 is a cross-sectional view generally along line 5,6-5,6 in Figure 4. The following should be viewed in light of Figures 2 through 6. Figure 6 is used to illustrate aspects of cavity **116.** In an example embodiment, portion **116B** of cavity **116** is at least partially bounded by end wall **108** in axial direction **AD2,** opposite direction **AD1** and end wall **110** in direction **AD1.** In an example embodiment, portion **122A** divides portion **116A** of cavity **116** into portions **116C** and **116D** and portion **122B** divides portion **116B** of cavity **116** into portions **116E** and **116F.** In an example embodiment, portion **116C** opens to portion **116E** and portion **116D** opens to portion **116F.**

In an example embodiment, portion **116G** of cavity **116** is axially located between end wall **108** and wall **124** of the filter element **120** and is part of portion **116B.** In an example embodiment, end **122C** of filter wall **122** is sealed against the second axially disposed side wall **106** and/or end wall **118** to ensure that fluid entering cavity **116** from the inlet port **112** passes through and not around filter **120.** In an example embodiment, the second axially disposed side wall **106** includes stepped portion **106C** and end **122C** is sealed against the stepped portion **122C** and/or end wall **118.** Typical fluid flow paths **FP** are shown in Figure 6.

In an example embodiment, end wall **108** is formed as a separate end cap including inlet port **112,** and the first axially disposed wall **104,** second axially disposed side wall **106,** and end wall **110** are part of an integral unit including outlet port **114.**

The capacity or function of fuel filter **100** is at least partly dependent upon how much filter material is available for filter **120,** which is at least partly dependent upon length **126** of element **120,** which in turn is dependent upon axial length **128** of the housing **102.** As discussed above, it is desirable to attain a specified filter capacity or function while minimizing overall axial length **130** of filter **100.** Advantageously, by recessing outlet port **114** into space **SP,** filter **100** maximizes lengths **126** and length **128,** while minimizing overall length **130** of filter **100.** Specifically, outlet port **114** does not contribute to length **130.** For example, lengths **126** and **128** can be made equal to lengths **216** and **214** noted above, with length **130** being advantageously less than length **212.** Thus, the same or greater fuel filter capacity is enabled for filter **100** while minimizing overall axial length **130** of filter **100.**

According to a embodiment of the invention the fuel filter **100,** comprises a housing **102** with a first axially disposed side wall **104,** forming a radially outermost portion of a circumference for the housing **102** and the second axially disposed side wall **106** located radially inward of the first axially disposed wall **104.** A cavity **116** is enclosed by the housing **102.** The cavity **116** has a first portion **116A** enclosed, in a radial direction **RD,** by only the first axially disposed side wall **104.** A second portion **116B** is radially disposed between the first and second axially disposed side walls **104, 106.** An inlet port **112** is open to the cavity **116.** An outlet port **114** is open to the first portion **116A** of the cavity **116** and including a distal end **114A** radially aligned with the second portion **116A** of the cavity **116.**

The housing **102** includes a first radially disposed end wall **108** directly connected to an axial end **104A** of the first axially disposed side wall **104** and the inlet port **112.** A second radially disposed end wall **110** directly connected to an axial end **106A** of the second axially disposed side wall **106.** The radially disposed end wall **110** has an outlet port **114.** The first portion **116A** of the cavity **116** is at least partially bounded by the first radially disposed end wall **108** in a first axial direction **AD1** and the second radially disposed end wall **110** in a second axial direction **AD2** which is opposite the first axial direction **AD1.** Furthermore, the housing **102** includes a radially disposed end wall **118** directly connected to respective axial ends **104B, 106B** of the first and second axially disposed side walls **104, 106.** The second portion 116B of the cavity 116 is open to the first portion **116A** of the cavity **116** and is at least partially bounded by the radially disposed end wall **118.**

A filter element **120** of the fuel filter **100** includes an axially disposed wall **122** located in the first and second portions **116A, 116B** of the cavity **116.** A radially disposed wall **124** is directly connected to the axially disposed wall **122** and located only in the first portion **116A** of the cavity **116.** A first portion **122A** of the axially disposed wall **122** for the filter element **120** divides the second portion **116B** of the cavity **116** into third and fourth portions **116C, 116D.** A second portion **122B** of the axially disposed wall **122** for the filter element **120** divides a part of the first portion **116A** of the cavity **116** into fifth and sixth portions **116E, 116F.** The third portion **116C** is open to the fifth portion **116E** and the fourth portion **116D** is open to the sixth portion **116E.**

The housing **102** includes the radially disposed end wall **108** which is directly connected to the first axially disposed side wall **104** and the inlet port **112.** The radially disposed wall **124** of the filter element **120** bounds the fifth portion **116E** in an axial direction **AD1.** A seventh portion **116G** of the cavity **116** is axially located between the radially disposed end wall **108** and the radially disposed wall **124** of the filter element **120.** The outlet port **114** includes a distal end **114B** axially opposite the first end **114A** and distal end **114B** is aligned, in a radial direction **RD,** with the third **116C** and fourth portions **116D** of the cavity **116.** An inlet port **112** open to the first portion **116A** of the cavity **116** and extending from the first radially disposed end wall **118** in an axial direction **AD1.**

According to a further embodiment a fuel filter **100** has a housing **102** including a first and second axially disposed side walls **104, 106,** a first radially disposed end wall **108** directly connected to a first axial end **104A** of the first axially disposed side wall **104,** a second radially disposed end wall **110** directly connected to a first axial end **106A** of the second axially disposed side wall **106** and a third radially disposed end wall **118** directly connected to respective second axial ends **104B, 106B** of the first and second axially disposed side walls **104,106.** A cavity **116** includes a first portion **116A** at least partially bounded by the first and third radially disposed end walls **108, 118** and the first axially disposed side wall **104.** A second portion **116B** of the cavity **116** open to the first portion **116A** and at least partially bounded by the first and second axially disposed side walls **104, 106** and the third radially disposed end wall **118.** An outlet port **114** is open to the first portion **116A** of the cavity **116.** The outlet port **114** has a first end direction connected to the third radially disposed wall **118** and a distal end **114B** which is radially aligned with the second portion **116B** of the cavity **116** and with the first and second axially disposed side walls **104, 106.** The outlet port **114** is separated from the second axially disposed side wall **106,** in a radial direction, by a space **SP.** An inlet port **112** is open to the first portion **116A** of the cavity **116** and directly connected to the first radially disposed end wall **108.** A filter element **120,** located within the cavity **116,** encompasses an axially extending portion with a first axial end **122A** sealed against the second axially disposed wall **106** or the third radially disposed end wall **118** and a radially extending portion is directly connected to a second axial end **122B** of the axially extending portion and wholly disposed in the first portion **116A** of the cavity **116.**

## Claims

1. A fuel filter (100), comprising:
a housing (102) including:
a first axially disposed side wall (104) forming a radially outermost portion of a circumference for the housing (102);
a first radially disposed end wall (108) connected to a first axial edge (104A) of the first axially disposed side wall (104);
a second radially disposed end wall (110);
an outlet port (114) which extends from the second radially disposed end wall (110); and,
an inlet port (112) extending from the first radially disposed end wall (108);
**characterized by**
a second axially disposed side wall (106) of the housing (102) located radially inward of the first axially disposed side wall (104) and defining a first axial end (106A),
a third radially disposed end wall (118) of the housing (102) connecting the first axially disposed side wall (104) with the second axially disposed side wall (106) at a second axial end (106B) opposite to the first axial end (106A);
wherein the second radially disposed end wall (110) is connected to the first axial end (106A), and wherein the outlet port (114) of the fuel filter (100) is radially aligned with the second axially disposed side wall (106); and
a filter element (120), located within a cavity (116) of the housing (102), having at least an axially disposed wall (122) with a first portion (122A), wherein the first portion (122A) of the axially disposed wall (122) is disposed between the first axially disposed side wall (104) and the second axially disposed side wall (106), and wherein the cavity (116) is divided by the filter element (120) into an unfiltered fluid portion (116C, 116E,116G) fluidly connected to the inlet port (112) and a filtered fluid portion (116D, 116F) fluidly connected to the outlet port (114).

2. The fuel filter (100) of claim 1, wherein the first radially disposed end wall (108) is directly connected to the first axial end (104A) of the first axially disposed side wall (104) and the inlet port (112).

3. The fuel filter (100) of any one of claims 1 to 2, wherein the outlet port (114) includes:
a first axial end (114A) directly connected to the second radially disposed end wall (110); and,
a distal end (114B) radially aligned with the first and second axially disposed side walls (104, 106).

4. The fuel filter (100) of any one of claims 1 to 3, wherein the outlet port (114) is separated, in a radial direction (RD), from the second axially disposed side wall (106) by a space (SP) external to the housing (102).

5. The fuel filter (100) of any one of claims 1 to 4, wherein the cavity (116) enclosed by the housing (100) and an axial direction (AD1) is from the inlet port (112) toward the outlet port (114); the outlet port (114) includes a first axial end (114A) directly connected to the second radially end wall (110); a distal end (114B) radially aligned with the first and second axially disposed side walls (104, 106); and a portion of the cavity (116) extends past the distal end (114B) in the axial direction (AD1).

6. The fuel filter (100) of any one of claims 1 to 5, wherein the third radially disposed end wall (118) connects a second axial end (106B), opposite the first axial end (106A) of the second axially disposed side wall (106) to a second axial end (104B), opposite the first axial end (104A), of the first axially disposed side wall (104).

7. The fuel filter (100) of any one of claims 5 to 6, wherein the cavity (116) enclosed by the housing 102, encompasses a first portion (116A) of the cavity (116) which is radially disposed between the first and second axially disposed side walls (104, 106); and a second portion (116B) of the cavity (116) which is radially disposed between the first axially disposed side wall (104, 106) and free of alignment, in a radial direction (RD), with the second axially disposed side wall (106).

8. The fuel filter (100) of any one of claims 1 to 7, wherein the filter element (120), located within the cavity (116), includes the axially disposed wall (122) and a radially disposed wall (124) connected to the axially disposed wall (122) and radially aligned with the outlet port (114).

9. The fuel filter (100) of claim 8, wherein:
a second portion (122B) of the axially disposed wall (122) of the filter element (120) is:
radially aligned with the first axially disposed side wall (104); and,
free of alignment, in a radial direction (RD), with the second axially disposed side wall (106).

10. The fuel filter (100) of claim 9, wherein the first portion (122A) of the axially disposed wall (122) for the filter element (120) divides the first portion (116A) of the cavity (116) into third and fourth portions (116C, 116D), and the second portion (122B) of the axially disposed wall (122) for the filter element (120) divides a part of the second portion (116B) of the cavity (116) into fifth and sixth portions (116E, 116F).

11. The fuel filter (100) of claim 10 , wherein the third portion (116C) is open to the fifth portion (116E) and the fourth portion (116D) is open to the sixth portion (116F).

12. The fuel filter (100) of claim 11, wherein the radially disposed wall (122) of the filter element (120) bounds the fifth portion (116 E) in an axial direction (AD1), and a seventh portion (116G) of the cavity (116) is axially located between the radially disposed end wall (124) of the filter element (120) and the first radially disposed wall (108) of the housing (102).

13. The fuel filter (100) of claim 10, wherein the outlet port (114) includes a distal end (114B) axially opposite the first end (114A) and the distal end (114B) is aligned, in a radial direction (RD), with the third and fourth portions (116C, 116D) of the cavity (116).

## Patentansprüche

1. Kraftstofffilter (100), umfassend:
ein Gehäuse (102), umfassend:
eine erste axial angeordnete Seitenwand (104), die einen radial äußersten Abschnitt eines Umfangs des Gehäuses (102) ausbildet;
eine erste radial angeordnete Endwand (108), die mit einer ersten axialen Kante (104A) der ersten axial angeordneten Seitenwand (104) verbunden ist;
eine zweite radial angeordnete Endwand (110);
einen Auslassanschluss (114), der sich von der zweiten radial angeordneten Endwand (110) aus erstreckt; und
einen Einlassanschluss (112), der sich von der ersten radial angeordneten Endwand (108) aus erstreckt;
**gekennzeichnet durch**
eine zweite axial angeordnete Seitenwand (106) des Gehäuses (102), die radial einwärts der ersten axial angeordneten Seitenwand (104) angeordnet ist und ein erstes axiales Ende (106A) definiert,
eine dritte radial angeordnete Endwand (118) des Gehäuses (102), welche die erste axial angeordnete Seitenwand (104) mit der zweiten axial angeordneten Seitenwand (106) an einem zweiten axialen Ende (106B) gegenüber dem ersten axialen Ende (106A) verbindet;
wobei die zweite radial angeordnete Endwand (110) mit dem ersten axialen Ende (106A) verbunden ist, und wobei der Auslassanschluss (114) des Kraftstofffilters (100) radial an der zweiten axial angeordneten Seitenwand (106) ausgerichtet ist; und
ein Filterelement (120), das innerhalb eines Hohlraums (116) des Gehäuses (102) angeordnet ist und mindestens eine axial angeordnete Wand (122) mit einem ersten Abschnitt (122A) aufweist, wobei der erste Abschnitt (122A) der axial angeordneten Wand (122) zwischen der ersten axial angeordneten Seitenwand (104) und der zweiten axial angeordneten Seitenwand (106) angeordnet ist, und wobei der Hohlraum (116) durch das Filterelement (120) in einen Abschnitt (116C, 116E, 116G) für ungefiltertes Fluid, der mit dem Einlassanschluss (112) fluidverbunden ist, und einen Abschnitt (116D, 116F) für gefiltertes Fluid, der mit dem Auslassanschluss (114) fluidverbunden ist, unterteilt wird.

2. Kraftstofffilter (100) nach Anspruch 1, wobei die erste radial angeordnete Endwand (108) direkt mit dem ersten axialen Ende (104A) der ersten axial angeordneten Seitenwand (104) und dem Einlassanschluss (112) verbunden ist.

3. Kraftstofffilter (100) nach einem der Ansprüche 1 bis 2, wobei der Auslassanschluss (114) Folgendes umfasst:
ein erstes axiales Ende (114A), das direkt mit der zweiten radial angeordneten Endwand (110) verbunden ist; und
ein distales Ende (114B), das radial an der ersten und der zweiten axial angeordneten Seitenwand (104, 106) ausgerichtet ist.

4. Kraftstofffilter (100) nach einem der Ansprüche 1 bis 3, wobei der Auslassanschluss (114) in einer radialen Richtung (RD) von der zweiten axial angeordneten Seitenwand (106) durch einen Raum (SP) außerhalb des Gehäuses (102) getrennt ist.

5. Kraftstofffilter (100) nach einem der Ansprüche 1 bis 4, wobei der Hohlraum (116) durch das Gehäuse (100) eingeschlossen ist und eine axiale Richtung (AD1) vom Einlassanschluss (112) in Richtung des Auslassanschlusses (114) verläuft; wobei der Auslassanschluss (114) ein erstes axiales Ende (114A), das direkt mit der zweiten radialen Endwand (110) verbunden ist; ein distales Ende (114B), das radial an der ersten und der zweiten axial angeordneten Seitenwand (104, 106) ausgerichtet ist, umfasst; und sich ein Abschnitt des Hohlraums (116) am distalen Ende (114B) vorbei in die axiale Richtung (AD1) erstreckt.

6. Kraftstofffilter (100) nach einem der Ansprüche 1 bis 5, wobei die dritte radial angeordnete Endwand (118) ein zweites axiales Ende (106B), gegenüber dem ersten axialen Ende (106A) der zweiten axial angeordneten Seitenwand (106), mit einem zweiten axialen Ende (104B), gegenüber dem ersten axialen Ende (104A) der ersten axial angeordneten Seitenwand (104), verbindet.

7. Kraftstofffilter (100) nach einem der Ansprüche 5 bis 6, wobei der Hohlraum (116), der durch das Gehäuse (102) umschlossen ist, einen ersten Abschnitt (116A) des Hohlraums (116), der radial zwischen der ersten und der zweiten axial angeordneten Seitenwand (104, 106) angeordnet ist; und einen zweiten Abschnitt (116B) des Hohlraums (116) umfasst, der radial zwischen der ersten axial angeordneten Seitenwand (104, 106) und ohne Ausrichtung in einer radialen Richtung (RD) an der zweiten axial angeordneten Seitenwand (106) angeordnet ist.

8. Kraftstofffilter (100) nach einem der Ansprüche 1 bis 7, wobei das Filterelement (120), das innerhalb des Hohlraums (116) angeordnet ist, die axial angeordnete Wand (122) und eine radial angeordnete Wand (124) umfasst, die mit der axial angeordneten Wand (122) verbunden ist und radial am Auslassanschluss (114) ausgerichtet ist.

9. Kraftstofffilter (100) nach Anspruch 8, wobei:
ein zweiter Abschnitt (122B) der axial angeordneten Wand (122) des Filterelements (120):
radial an der ersten axial angeordneten Seitenwand (104) ausgerichtet ist; und
ohne Ausrichtung in einer radialen Richtung (RD) an der zweiten axial angeordneten Seitenwand (106) ist.

10. Kraftstofffilter (100) nach Anspruch 9, wobei der erste Abschnitt (122A) der axial angeordneten Wand (122) für das Filterelement (120) den ersten Abschnitt (116A) des Hohlraums (116) in einen dritten und einen vierten Abschnitt (116C, 116D) unterteilt und der zweite Abschnitt (122B) der axial angeordneten Wand (122) für das Filterelement (120) einen Teil des zweiten Abschnitts (116B) des Hohlraums (116) in einen fünften und einen sechsten Abschnitt (116E, 116F) unterteilt.

11. Kraftstofffilter (100) nach Anspruch 10, wobei der dritte Abschnitt (116C) gegenüber dem fünften Abschnitt (116E) offen ist und der vierte Abschnitt (116D) gegenüber dem sechsten Abschnitt (116F) offen ist.

12. Kraftstofffilter (100) nach Anspruch 11, wobei die radial angeordnete Wand (122) des Filterelements (120) den fünften Abschnitt (116E) in einer axialen Richtung (AD1) begrenzt und ein siebter Abschnitt (116G) des Hohlraums (116) axial zwischen der radial angeordneten Endwand (124) des Filterelements (120) und der ersten radial angeordneten Wand (108) des Gehäuses (102) angeordnet ist.

13. Kraftstofffilter (100) nach Anspruch 10, wobei der Auslassanschluss (114) ein distales Ende (114B) axial gegenüber dem ersten Ende (114A) umfasst und das distale Ende (114B) in einer radialen Richtung (RD) an dem dritten und dem vierten Abschnitt (116C, 116D) des Hohlraums (116) ausgerichtet ist.

## Revendications

1. Filtre de carburant (100), comprenant :
un logement (102) comportant :
une première paroi de côté disposée axialement (104) formant une portion la plus à l'extérieur radialement d'une circonférence pour le logement (102) ;
une première paroi d'extrémité disposée radialement (108) raccordée à un premier bord axial (104A) de la première paroi de côté disposée axialement (104) ;
une deuxième paroi d'extrémité disposée radialement (110) ;
un orifice de sortie (114) qui s'étend depuis la deuxième paroi d'extrémité disposée radialement (110) ; et,
un orifice d'entrée (112) s'étendant depuis la première paroi d'extrémité disposée radialement (108) ;
**caractérisé par**
une seconde paroi de côté disposée axialement (106) du logement (102) située radialement vers l'intérieur de la première paroi de côté disposée axialement (104) et définissant une première extrémité axiale (106A),
une troisième paroi d'extrémité disposée radialement (118) du logement (102) raccordant la première paroi de côté disposée axialement (104) à la seconde paroi de côté disposée axialement (106) au niveau d'une seconde extrémité axiale (106B) opposée à la première extrémité axiale (106A) ;
dans lequel la deuxième paroi d'extrémité disposée radialement (110) est raccordée à la première extrémité axiale (106A), et dans lequel l'orifice de sortie (114) du filtre de carburant (100) est aligné radialement avec la seconde paroi de côté disposée axialement (106) ; et
un élément de filtre (120), situé au sein d'une cavité (116) du logement (102), ayant au moins une paroi disposée axialement (122) avec une première portion (122A), dans lequel la première portion (122A) de la paroi disposée axialement (122) est disposée entre la première paroi de côté disposée axialement (104) et la seconde paroi de côté disposée axialement (106), et dans lequel la cavité (116) est divisée par l'élément de filtre (120) en une portion de fluide non filtré (116C, 116E, 116G) raccordée fluidiquement à l'orifice d'entrée (112) et une portion de fluide filtré (116D, 116F) raccordée fluidiquement à l'orifice de sortie (114).

2. Filtre de carburant (100) selon la revendication 1, dans lequel la première paroi d'extrémité disposée radialement (108) est raccordée directement à la première extrémité axiale (104A) de la première paroi de côté disposée axialement (104) et à l'orifice d'entrée (112).

3. Filtre de carburant (100) selon l'une quelconque des revendications 1 et 2, dans lequel l'orifice de sortie (114) comporte :
une première extrémité axiale (114A) raccordée directement à la deuxième paroi d'extrémité disposée radialement (110) ; et
une extrémité distale (114B) alignée radialement avec les première et seconde parois de côté disposées axialement (104, 106).

4. Filtre de carburant (100) selon l'une quelconque des revendications 1 à 3, dans lequel l'orifice de sortie (114) est séparé, dans une direction radiale (RD), de la seconde paroi de côté disposée axialement (106) par un espace (SP) externe au logement (102).

5. Filtre de carburant (100) selon l'une quelconque des revendications 1 à 4, dans lequel la cavité (116) close par le logement (100) et une direction axiale (AD1) va de l'orifice d'entrée (112) vers l'orifice de sortie (114) ; l'orifice de sortie (114) comporte une première extrémité axiale (114A) raccordée directement à la deuxième paroi d'extrémité disposée radialement (110) ; une extrémité distale (114B) alignée radialement avec les première et seconde parois de côté disposées axialement (104, 106) ; et une portion de la cavité (116) s'étend au-delà de l'extrémité distale (114B) dans la direction axiale (AD1).

6. Filtre de carburant (100) selon l'une quelconque des revendications 1 à 5, dans lequel la troisième paroi d'extrémité disposée radialement (118) raccorde une seconde extrémité axiale (106B), opposée à la première extrémité axiale (106A) de la seconde paroi de côté disposée axialement (106) à une seconde extrémité axiale (104B), opposée à la première extrémité axiale (104A), de la première paroi de côté disposée axialement (104).

7. Filtre de carburant (100) selon l'une quelconque des revendications 5 et 6, dans lequel la cavité (116) close par le logement (102), englobe une première portion (116A) de la cavité (116) qui est disposée radialement entre les première et seconde parois de côté disposées axialement (104, 106) ; et une deuxième portion (116B) de la cavité (116) qui est disposée radialement entre la première paroi de côté disposée axialement (104, 106) et dépourvue d'alignement, dans une direction radiale (RD), avec la seconde paroi de côté disposée axialement (106).

8. Filtre de carburant (100) selon l'une quelconque des revendications 1 à 7, dans lequel l'élément de filtre (120), situé au sein de la cavité (116), comporte la paroi disposée axialement (122) et une paroi disposée radialement (124) raccordée à la paroi disposée axialement (122) et alignée radialement avec l'orifice de sortie (114).

9. Filtre de carburant (100) selon la revendication 8, dans lequel :
une seconde portion (122B) de la paroi disposée axialement (122) de l'élément de filtre (120) est :
alignée radialement avec la première paroi de côté disposée axialement (104) ; et,
dépourvue d'alignement, dans une direction radiale (RD), avec la seconde paroi de côté disposée axialement (106).

10. Filtre de carburant (100) selon la revendication 9, dans lequel la première portion (122A) de la paroi disposée axialement (122) pour l'élément de filtre (120) divise la première portion (116A) de la cavité (116) en des troisième et quatrième portions (116C, 116D), et la seconde portion (122B) de la paroi disposée axialement (122) pour l'élément de filtre (120) divise une partie de la deuxième portion (116B) de la cavité (116) en des cinquième et sixième portions (116E, 116F).

11. Filtre de carburant (100) selon la revendication 10, dans lequel la troisième portion (116C) est ouverte sur la cinquième portion (116E) et la quatrième portion (116D) est ouverte sur la sixième portion (116F).

12. Filtre de carburant (100) selon la revendication 11, dans lequel la paroi disposée radialement (122) de l'élément de filtre (120) délimite la cinquième portion (116E) dans une direction axiale (AD1), et une septième portion (116G) de la cavité (116) est située axialement entre la paroi d'extrémité disposée radialement (124) de l'élément de filtre (120) et la première paroi disposée radialement (108) du logement (102).

13. Filtre de carburant (100) selon la revendication 10, dans lequel l'orifice de sortie (114) comporte une extrémité distale (114B) opposée axialement à la première extrémité (114A) et l'extrémité distale (114B) est alignée, dans une direction radiale (RD), avec les troisième et quatrième portions (116C, 116D) de la cavité (116).
